# NEUE EUROPÄISCHE PATENTSCHRIFT

(11) **EP 0 430 956 B2**
(45) Veröffentlichungstag und Bekanntmachung des Hinweises auf die Entscheidung über den Einspruch: **02.07.1997**
(45) Hinweis auf die Patenterteilung: 02.09.1992
(21) Anmeldenummer: 89907718.4
(22) Anmeldetag: 29.06.1989
(51) Int. Cl.: G11B 33/04

(54) **AUFBEWAHRUNGSKASSETTE FÜR KREISFÖRMIGE INFORMATIONSPLATTEN**
STORAGE CASE FOR CIRCULAR DATA CARRIERS
COFFRET DE STOCKAGE POUR DISQUES DE DONNEES

(30) Priorität: 29.08.1988 DE 8810917 U; 22.06.1989 DE 3920485
(43) Veröffentlichungstag der Anmeldung: 12.06.1991
(60) Teilanmeldung: 91121746.1
(73) Patentinhaber: CARTONNERIES DE THULIN S.A., B-7350 Thulin (BE)
(72) Erfinder: Dunker, Petra, W-4030 Ratingen 6 (DE)
(74) Vertreter: Stenger, Watzke & Ring Patentanwälte
(86) Internationale Anmeldenummer: EP8900741
(87) Internationale Veröffentlichungsnummer: WO9002403

(56) Entgegenhaltungen:
- EP-A- 001 353
- EP-A- 114 631
- EP-A- 221 749
- EP-A- 272 042
- DE-A- 2 050 964
- DE-A- 3 414 903
- DE-B- 497 935
- FR-A- 2 477 124
- GB-A- 822 305
- GB-A- 2 132 588

## Beschreibung

Die Erfindung betrifft eine Aufbewahrungskassette für kreisförmige Informationsplatten, insbesondere optisch auslesbare Videoplatten und digitale Schaltplatten, auch als CD bekannt, bestehend aus einem Bodenteil, einem Deckelteil und einem Plattenaufnahmeteil. Dabei ist das Plattenaufnahmeteil zwischen dem Deckelteil un dem Bodenteil angeordnet. Zwei Schamiereinrichtungen gestatten Schwenkbewegungen zwischen den drei Teilen.

Es ist bekannt, (EP 0 272 042A2) z. B. Compact Discs (CDs) in derartigen Aufbewanrungskassetten aufzubewahren und auch zu verkaufen. Derartige Kassetten werden in Regalen oder ähnlichen Präsentations- bzw. Aufbewahrungsmöbeln untergebracht. Sie enthalten außer der CD üblicherweise auch Informationen über die CD. Die eingangs genannten Aufbewahrungskassetten sind besonders weit verbreitet. In das Bodenteil ist in der Regel eine einseitig nutzbare Infarmationsschrift eingelegt, die an zwei gegenüberliegenden Kanten geknickt ist, so daß die abgeknickten Bereiche wie Buchrücken beschriftbar sind. Zu diesem Zweck sind die Bodenteile aus durchsichtigem Kunststoff hergestellt. Die Deckelteile nehmen eine mehrseitig nutzbare Informationsschrift oder auch ein sogenanntes Booklet auf. Diese bilden das Cover. Zu diesem Zweck besteht auch das Deckelteil aus durchsichtigem Kunststoff. Die CD wird bei diesen bekannten Aufbewahrungskassetten also nach dem Öffnen, d. h. Aufklappen von Boden- oder Deckelteil sichtbar. - Diese bekannten Aufbewahrungskassetten haben den Nachteil, relativ voluminös zu sein.

Aus der DE 33 01 644 A1 ist eine Aufbewahrungskassette für zwei oder mehr CDs bekannt, bei der ein einen Zwischenboden bildendes Mittelteil mit umlaufenden Stirnwänden zur Aufnahme von je einer CD auf jeder Seite des Zwischenbodens vorgesehen ist. An der Oberseite und an der Unterseite dieses Mittelteiles ist je ein Bodenteil mittels Scharnieren schwenkbar gelagert. Jedes dieser Bodenteile kann eine weitere CD aufnehmen. Die beiden Schamiereinrichtungen befinden sich an derselben Kante des Mittelteiles. Diese bekannte Aufbewahrungskassette ist lediglich bei der Nutzung für drei oder vier CDs sinnvoll, weil sie vergleichsweise voluminös ist. Sie hat darüber hinaus den Nachteil, daß Informationen, wie bei einem Buchrücken, nur unter erhöhtem Aufwand an den Stirnwänden der Aufbewahrungskassette anbrigbar sind, da die Außenseiten der beiden Badenteile nur dann zur Aufnahme einer in keinem Fall nerausnehmbaren Informationsschrift geeignet sind, wenn zusätzliche Plattenaufnahmeteile in die beiden Bodenteile eingesetzt sind, was die Aufbewahrungskassete noch voluminöser macht Der Zwischenboden (Plattenaufnahmeteil) weist beistseilig kreisförmige Ausparungen zur Aufnahme einer Auflagescheibe mit Zapfenanordnung für je eine CD auf. Diese ist arbeitsaufwendig und voluminös.

Aus der DE 34 14 903 A1 ist eine ähnliche Aufbewahrungskassette wie aus der zuvor beschriebenen DE 33 01 644 A1 bekannt, bei der zwar das Mittelteil vom Boden und Deckelteil völlig eingeschlossen wird und - bis auf die nicht vorgesehenen Buchrücken - die von Aufbewahrungskassetten für einzelne CDs bekannten Infarmationsflächen nutzbar bleiben, die dafür aber andere Nachteile hat. Bei dieser bekannten

Aufbewahrungskassette sind nämlich nicht zwei Schamiereinrichtungen parallel nebeneinander angeordnet sondem ist vielmehr ein einziges Gelenk mit Mehrfachfuncktion vorgesehen wobei sowohl das Bodenteil als auch das Plattenaufnahmeteil, dort Plattenträger genannt, an jeder Seite mit bezüglich des Bodens schrägstehenden und deshalb raumgreifend wirkenden Langlöchern versehen sein müssen, in die Zapfen eingreifen, welche am Deckelteil koaxial angeordnet sind. Bei diesen bekannten Aufbewahrungskassetten sind zum Öffnen also nicht nur reine Schwenkbewegungen, sondern Schenk/ Schiebe-Bewegungen erforderlich. Dabei kann es leicht zum Verkanten der gegeneinander veschwenkten Teile kommen. Wenn im Falle einer solchen Verkantung versucht wird, diese wieder rückgängig zu machen, besteht die Gefahr, daß dies ruckartig erfolgt und die in der Kassette aufbewahrten CDs dabei herausfallen, verkratzt werden oder in sonstiger Weise leiden. Das Mittelteil (Plattenaufnahmeteil) weist zentrische Durchbrechung auf, die beiseitig von mehreren miteinanderfluchtenden Zapfen zur Aufnahme und zum Festklemmen der CD umgeben ist Es hat sich herausgestellt, daß dieses bekannte Plattenaufnahmeteil nicht sicher genug gegen ein ungewolltes Sich-Lösen der CDs sowie herstellungs technisch aufwendig ist.

Schließlich ist aus der GB 2 132 588 A eine Aufbewahrungskassette für "floppy discs" für Computer bekannt, bei der die Aufgabe einer einstückigen Herstellbarkeit aller Teile verfolgt wird und daher Foliengelenke anstelle von Schamiereinrichtungen mehrere Einzelteile miteinander gelenkig verbindenden Balzen oder dergleichen verwendet werden. Mit derartigen Foliengelenken ist es nicht mäglich, ein Plattenaufnahmeteil so zu gestalten, daß es van dem Badenteil aufnehmbar, also in dieses nachträglich einsetzbar ist, was aber für das Konfektionieren erfindungsgemäßer Aufbewahrungskassetten mit zwei CDs durchaus erwünscht ist. Im übrigen ist die aus der GB 2 132 588 bekannte Aufbewahrungskassette für CDs völlig ungeeignet, weil diese im Bereich der die Informationen speichernden Flächen nicht mit anderen Teilen in Berührung kommen sollen. Demgemäß sieht die GB 2 132 588 als Anwendungsgebiet "Scheiben" nur insoweit vor, als es sich um sogenannte "floppy discs" für Computer handelt, die bekanntlich in einer eigenen Schutzhülle angeordnet und mit dieser gemeinsam zur Aufbewahrung fortgestellt werden, z. B. in Aufbewahrungskästen oder dergleichen. Die GB 2 132 588 zeigt einen solchen Aufbewahrungskasten nach Art eines Schallplattenalbums, bei dem also der Aufbewahrungskasten mit einer einem Bucheinband ähnlichen Umhüllung umschlossen werden kann. Diese bekannte Aufbewahrungsanordnung ist erkennbar raumgreifend und für die Aufbewahrung von CDs erkennbar ungeeignet Im übrigen ist der Aufbewahrungskasten im Nutzungszustand lediglich um 60°, maximal um etwa 100°, bezüglich der buchrückenähnlichen Umhüllung verschwenkbar, da ansonsten nicht nur die Höhe des Aufbewahrungskastens im Wege stünde, sondem auch das Foliengelenk, wenn es häufig um einen relativ großen Winkel hin und hergeschwenktwird, leicht brüchig werden könnte. Davon ausgehend liegt der Erfindung die Aufgabe zugrunde, eine Aufbewahrungskassette der eingangs genannten Art zu schaffen, die als funktionsichere Raumsparanordnung ausgebildet ist.

Zur Lösung dieser Aufgabe wird eine Aufbewahrungskassette mit den Merkmalen des Anspruchs 1 vorgeschlagen. Eine solche Aufbewahrungskassette kann außerordentlich flach ausgeführt und beim Verschwenken völlig verkantungsfrei sein und mit weit verschwenkbarem Plattenaufnahmeteil für zwei CDs versehen werden. Es hat sich als vorteilhaft erwiesen, das Bodenteil an gegenüber liegenden Kanten, mit Stirnwänden zu versehen, die vorzugsweise als Buchrücken nutzbar sind. Derart angeordnete Stimwände erhöhen die Funktionssicherheit der Schamiereinrichtungen und erleichtern es auch, die geschlossene Aufbewahrungskassette staubfrei zu halten. Eben-so hat sich für eine funktionssichere Benutzung der Aufbewahrungskassette ein Schwenkwegbegrenzer für das plattenaufnahmeteil in dessen ausgeschwenktem Zustand als varteilhaft erwiesen, da dadurch ein unbeabsichtigtes völliges Umkippen des Plattenaufnahmeteiles und daraus resultierende Beschädigungen der kreisförmigen Informationsplatte wirkungsvoll unterbunden werden..

Durch die Erfindung und ihre Ausgestartungen werden u. a. folgende Vorteile erreicht:
- Durch die neuartige Schamieranordnung wird der Herausfallschutz für kreisförmige Informationsträger, insbesondere CDs, aus der Aufbewahrungskassette bei deren Öffnen oder Benutzen in geöffnetem Zustand erheblich verbessert;
- durch die Öffnungswinkelbegrenzung wird der Herausfallschutz weiter verbessert;
- die Aufbewahrungskassette ist ebenso staubdicht, wie die bekannten und handelsüblichen Aufbewahrungskassetten für einzelne CDs;
- die Aufbewahrungskassette besteht aus nur drei, insgesamt einfach herzustellenden Teilen;
- es können dieselben Deckelteile wie für bekannte Aufbewahrungskassetten für lediglich eine einzige CD verwendet werden; auch an dem Bodenteil dieser bekannten Aufbewahrungskassette sind nur geringfügige Änderungen, nämlich zwei Bohrungen als Schamierteile erforderlich;
- Einstellmöbel zur Präsentation oder privaten Aufbewahrung erfindungsgemäßer Aufbewahrungskassetten, wie sie bisher für Einzelkassetten benutzt werden, können uneingeschränkt weiterbenutzt werden;
- auf demselben Raum, auf dem bisher lediglich eine einzelne CD oder andere kreisförmige Informationsplatte unterbringbar war, können nunmehr zwei CDs untergebracht werden;
- darüber hinaus wird eine vierte mit Informationen versehbare Fläche in der Aufbewahrungskassette geschaffen, die so groß ist wie etwa die gesamte Vorder- bzw. Rück seite der Aufbewahrungskassette.

Zweckmäßige Ausgestaltungen des Erfindungsgegenstandes, die insbesondere eine einfache Produktionsumstellung und Lagerhaltung der Einzelteile sowie eine vorteilhafte Handhabbarkeit der Aufbewahrungskassette und bestmöglichen Schutz der darin aufbewahrten Informationsplatten gewährleisten, sind in weiteren Ansprüchen enthalten.

Die erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer eines erfindungsgemäßen Aufbewahrungskassette bzw. Plattenaufnahmeteils-beispielhaft dargestellt ist In der Zeichnung zeigen :
Fig. 1 eine erfindungsgemäße Aufbewahrungskassette im aufgeklappten Zustand in Seitenansicht
Fig. 2 von derselben Aufbewahrungskassette eine Draufsicht auf die obere Seite des Plattenaufnahmeteiles (Ansicht A gemäß Fig. 1);
Fig. 3 von demselben Plattenaufnahmeteil eine Ansicht von unten (Ansicht B gemäß Fig. 1) ausschnittsweise sowie
Fig. 4 von einer alternativen Ausführungsform eines Plattenaufnahmeteiles eine Schnittdarstellung -entsprechend dem Schnitt entlang der Linie V - V gemäß Fig. 1 und 2.

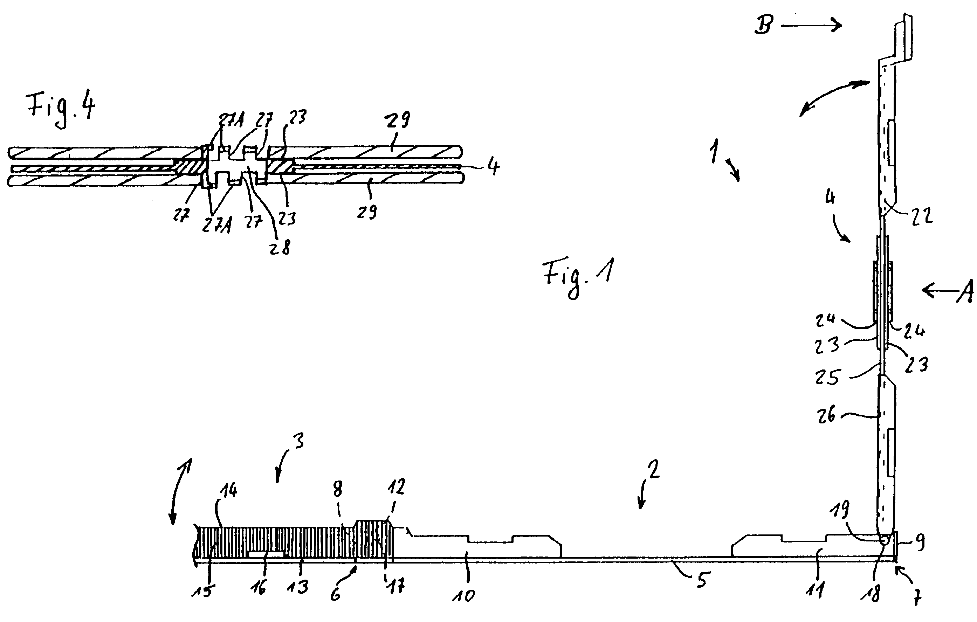

In Fig. 1 ist eine erfindungsgemäße Aufbewahrungskassette insgesamt mit 1 bezeichnet, welche aus einem Bodenteil 2, einem Deckelteil 3 und einem Plattenaufnahmeteil 4 besteht.

Das Bodenteil 2 weist im Grundriß im wesentlichen rechteckförmige, nicht ganz quadratische Bodenplatte 5 auf, welche an den schmaleren kanten 6 und 7 des Bodenteils 2 einstückig mit Stirnwänden 8 und 9 verbunden ist. Zumindest in den Bereichen der Kanten 6 und 7 weist die Bodenplatte 5 entlang der Kanten der relativ längeren Seiten seitenwandbildende Flansche 10 und 11 auf. Nahe der in der Zeichnung links dargestellten Kante 6 des Bodenteiles 2 sind in den einander gegenüberliegenden Flanschen 10 (der zweite Flansch 10 ist von dem ersten Flansch 10 verdeckt) Bohrungen bzw. kreisförmige Ausnehmungen 12 vorgesehen, welche das bodenseitige Teil einer Schamiereinrichtung bilden.

Das Deckelteil 3 weist eine im Grundriß annähernd quadratische oder von der quadratischen Form leicht abweichende Deckelplatte 13 auf, die an zwei ihrer gegenüberliegenden Kanten einstückig mit Seitenwänden 14 verbunden ist bzw. (wie die Einzelteile des Bodenteiles) einstückig damit gebildet ist. In dem dargestellten Ausführungsbeispiel weisen die Seitenwände 14 Riffelungen 15 sowie Ausnehmungen 16 auf. Die Riffelungen 15 sind in erster Linie aus optischen Gründen vorgesehen. Die Ausnehmungen 16 sind an ihrer oberen Begrenzung auf der Rückseite (Innenseite) der Seitenwände 14 mit etwa halbkreisförmigen Stegen (nicht dargestellt) versehen, welche u. a. als Distanzhalter bei geschlossener Aufbewahrungskassette dienen und welche darüber hinaus zwischen sich und der Innenfläche der Bodenplatte 13 eine zwischen den Seitenwänden 14 seitlich einschiebbare Informationsschrift (nicht dargestellt) halten können. im Bereich der in der Zeichnung rechten Kante des Deckelteiles 3, welche im wesentlichen mit der Kante 6 des Bodenteiles 2 zusammenfällt (im Grundriß gesehen), weisen die Seitenwände 14 des Deckelteiles 3 nach innen vorspringende Scharnierstifte 17 auf, deren Abmessungen denen der Bahrung 12 entsprechen und die in die Bohrungen 12 unter Ausbildung eines Schamiers eingreifen. Die Schamiere 12, 17 auf beiden (in der Zeichnung hintereinander liegenden) Seiten des Bodenteiles 2 und des Deckelteiles 3 bilden gemeinsam eine Schamiereinrichtung, mit welcher das Deckelteil bezüglich des Bodenteiles um einen Winkel von vorzugsweise etwa 180° schwenkbar ist.

Insoweit sind das Bodenteil 2, das Deckelteil 3 und die Schamiereinrichtung 12, 17, die insgesamt aus durchsichtigem Kunststoff hergestellt sind und im geschlossenen Zustand eine Aufbewahrungskassette, vorzugsweise für Kompakt-Discs bilden, bei welcher die beiden Stirnwände 8 und 9 des Bodenteiles 2 durch Einlegen entsprechender bedruckter Blätter die Funktion eines Buchrückens übernehmen, allgemein bekannt und weitverbreitet zur Aufnahme einer CD je Aufbewahrungskassette.

Während nun bei den bekannten Aufbewahrungskassetten das Plattenaufnahmeteil 4 in das Bodenteil 2 derart fest eingeklipst ist, daß es ohne eine Beschädigung der Aufbewahrungskassette praktisch nicht mehr herausgenommen werden kann, ist ein erfindungsgemäßes Plattenaufnahmeteil um eine zweite Scharniereinrichtung 18, 19 bezüglich des Bodenteils 2 um etwa 90° schwenkbar.

Die Schamiereinrichtung besteht aus je einem am Plattenaufnahmeteil 4 angeordneten, mit ihm einstückig verbundenen Schamierstift 19 an jeder Seite in der unmittelbaren Nähe der Kante 7 des Bodenteiles 2 sowie je einer Bohrung 18 zur Aufnahme je eines Schamierstiftes 19. Eine solche Bahrung ist in jeder der beiden Flanschen 11 nahe der Kante 7 etwa kanvenparallel vorgesehen.

Wenn das Plattenaufnahmeteil in das Bodenteil 2 völlig hineigeschwenkt ist, ist die Aufbewahrungskassette von einer herkömmlichen Aufbewahrungskassette für eine einzelne CD so gut wie nicht mehr zu unterscheiden.

Das Plattenaufnahmeteil unterscheidet sich zum einen dadurch von der zur Aufnahme einer einzigen CD weit verbreiteten Aufnanmekassette, daß es mit den vorerwähnten Schamierstiften versehen und an der die Schamierstifte tragenden Kante des in Fig. 2 in Draufsicht dargestellten Plattenaufnahmeteils frei von die Schwenkbewegung etwa hindemden Kanten ist Dabei ist das Plattenaufnahmeteil im Bereich der die zweite Schamiereinrichtung tragenden Kante 4A so geformt ist, daß z. B. die Stirnwand 9 des Bodenteiles 2 als Schwenkwegbegrenzer für das Plattenaufnahmeteil dient Dies ist aus Fig. 1 ersichtlich.

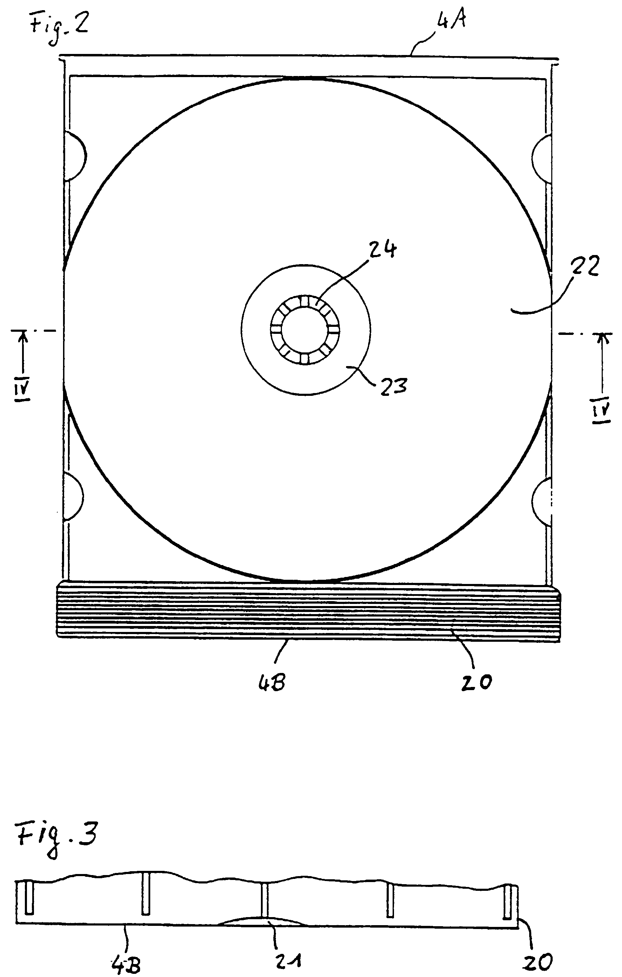

An der der Kante 4A des Plattenaufnahmeteils 4, an welche die zweite Schamiereinrichtung 18, 19 vorgesehen ist, gegenüberliegenden Kante 4B ist eine Griffleiste 20 vorgesehen, welche auf ihrer Unterseite (siehe Fig. 3) eine Eingriffmulde 21 aufweist, mit der man die Kante 4B z. B. mit einem Fingemagel untergreifen und somit das Plattenaufnahmeteil 4 vom Bodenteil 2 an dieser Kante abheben kann. Im übrigen ist das Plattenaufnahmeteil 4 im Bereich seiner in Fig. 2 dargestellten Oberseite in ähnlicher Weise gestaltet, wie die bekannten Plattenaufnahmeteile für eine einzelne CD, d. h. es ist eine etwa kreisringförmige Vertiefung 22 in die Oberfläche eingearbeitet und ein Tragring 23 für die CD im zentralen Bereich sowie ein mehrgliedriger Klemmring 24 sind vorgesehen. Die Vertiefung 22 ist allerdings nicht so tief wie bei den bekannten Aufbewahrungskassetten für eine einzige CD. Der Klemmring 24 ist mit einem leichten Übermaß ausgestattet, so daß das zentrale Loch einer CD mit leichtem Druck über den Klemmring schiebbar ist und die CD dann van dem Klemmring in dieser Position klemmend gehalten wird. Die Unterseite 25 des Plattenaufnahmeteils 4 weist vorzugsweise ebenfalls eine kreisringförmige Vertiefung 26 zur schützenden Aufnahme einer CD sowie einen weiteren Tragring 25 und einen weiteren Klemmring 24 in der gleichen Art wie die entsprechenden Mittel auf der gegenüberliegenden (oberen) Seite des Plattenaufnahmeteils auf. Der Platz für die Vertiefung 26 wird durch die Verringerung der Tiefe der Vertiefung 22 geschaffen.

Das Plattenaufnahmeteil 4 ist vorzugsweise aus Kunststoff hergestellt. Zur Erzielung gut angepaßter Klemmkräfte für die zentrale Aufnahme von zwei CDs an gegenüberliegenden Seiten empfiehlt sich die in Fig. 4 schematisch dargestellte Anordnung, gemäß der im Querschnitt abgewinkelte Zungen 27 am Umfang einer zentralen Öffnung 28 des Plattenaufnahmeteils 4 derart wechselweise verteilt angeordnet sind, daß abwechselnd eine abgewinkelte Zunge nach oben und eine abgewinkelte Zunge nach unten ragt, wobei Zungenenden 27A in die Öffnung 28 (in Draufsicht betrachtet) hineinragen. Eine derartige Zungenanordnung ist nicht nur sehr wirkungsvoll, sondern auch mit einfachen Spritzgießwerkzeugen ohne Formenschieber od. dgl. herstellbar. Gleichwohl können die an beiden Seiten des Plattenaufnahmeteils anzuordnenden CDs 29 gleich sicher gehalten werden. Auch ein häufiges Entnehmen und Zurücklegen der CDs ist problemlos möglich.

### Bezugszeichenliste:

- 1: Aufbewahrungskassette
- 2: Bodenteil
- 3: Deckelteil
- 4: Plattenaufnahmeteil
- 4A: Kante
- 4B: Kante
- 5: Bodenplatte
- 6: Kante
- 7: Kante
- 8: Stimwand
- 9: Stimwand
- 10: Flansch
- 11: Flansch
- 12: Bohrung
- 13: Deckelplatte
- 14: Stirnwände
- 15: Riffelung
- 16: Ausnehmung
- 17: Schamierstifte
- 18: Bohrung
- 19: Schamierstifte
- 20: Griffleiste
- 21: Eingriffmulde
- 22: Vertiefung
- 23: Tragring
- 24: Klemmring
- 25: Unterseite
- 26: Vertiefung
- 27: Zungen
- 27A: Zungenenden
- 28: Öffnungen
- 29: CD
- A: Ansicht
- B: Ansicht

## Patentansprüche

1. Aufbewahrungskassette für kreisförmige Informationsplatten (29), bestehend aus einem Bodenteil (2), einem Deckelteil (3) und einem Plattenaufnahmeteil (4), bei der
- das Bodenteil (2) bezüglich des Deckelteils (3) mittels einer ersten an einer ersten Kante (6) des Bodenteils vorgesehenen Scharniereinrichtung (12, 17) schwenkbar ist und das Plattenaufnahmeteil (4) von dem Bodenteil (2) schwenkbar aufnehmbar ist,
- beide Seiten des Plattenaufnahmeteils (4) jeweils Klemmhalterungen (24; 27) für je ein Zentralloch einer kreisförmigen Informationsplatte (29) aufweisen,
**dadurch gekennzeichnet**, daß
- das Plattenaufnahmeteil (4) am Bodenteil (2) durch eine zweite Scharniereinrichtung (18, 19) schwenkbar gelagert ist, die an der der ersten Kante (6) mit der ersten Scharniereinrichtung (12, 17) gegenüberliegenden Kante (7) des Bodenteils (2) angeordnet ist,
- daß sich das Plattenaufnahmeteil (4) mittels der zweiten Scharniereinrichtung (18, 19) um einen maximalen Schwenkwinkel von mindestens 80° bis in eine Endlage verschwenken läßt, in der das Plattenaufnahmeteil (4) an einem im Bereich der zweiten Scharniereinrichtung (18, 19) angeordneten Schwenkwegbegrenzer zur Anlage kommt und in der beide Seiten des Plattenaufnahmeteils(4) zur beliebigen Entnahme einer der beiden Informationsplatten (29) frei zugänglich sind.

2. Aufbewahrungskassette nach Ansprüch 1, dadurch gekennzeichnet, daß das Deckelteil (3) und das Bodenteil (2) bis auf die zweite Scharniereinrichtung (18, 19) handelsübliche Teile einer Aufbewahrungskassette (1) für eine einzige kreisförmige Informationsplatte sind.

3. Aufbewahrungskassette nach einem der Ansprüche 1 oder 2, gekennzeichnet durch eine Eingriffmulde (21) zwischen dem Bodenteil (2) und dem Plattenaufnahmeteil (4) an der der zweiten Scharniereinrichtung (18, 19) gegenüberliegenden Kante (6) des Bodenteiles (2).

4. Aufbewahrungskassette nach einem der Ansprüche 1 bis 3, dadurch gekennzeichnet, daß die zweite Scharniereinrichtung (18, 19) im Inneren des Bodenteiles (2) neben einer zu ihre parallelen Stirwand (9) angeordnet ist.

5. Aufbewahrungskassette nach einem des Ansprüche 1 bis 4, dadurch gekennzeichnet, daß das Bodenteil (2) an seiner die Scharniereinrichtung (12, 17) aufnehmenden Kante (6) sowie an der dieser gegenüberliegenden Kante (7) als Buchrücken nutzbare Stirnwände (8, 9) aufweist.

6. Aufbewahrungskassette nach einem der Ansprüche 1 bis 5, dadurch gekennzeichnet, daß der Schwenkwegbegrenzer an der insbesondere als zweiter Buchrücken nutzbaren Stirnwand (9) des Bodenteiles (2) vorgesehen ist.

7. Aufbewahrungskassette nach einem der Ansprüche 1 bis 6, dadurch gekennzeichnet, daß der maximale Schwenkwinkel zwischen dem Plattenaufnahmeteil (4) und dem Bodenteil (2) 120°, vorzugsweise etwa 80° bis 100° beträgt.

8. Aufbewahrungskassette nach einem der Ansprüche 1 bis 7, dadurch gekennzeichnet, daß das Plattenaufnahmeteil (4) mit ihm einstückig verbundene Scharnierstifte (19) an jeder Seite und das Bodenteil (2) je eine Bohrung (18) zur Aufnahme je eines Scharnierstiftes (19) als Scharniereinrichtung aufweisen.

9. Aufbewahrungskassette nach Anspruch 8, dadurch gekennzeichnet, daß die Bohrungen (18) in je einem Flansch (11) des Bodenteils (2) vorgesehen sind.

10. Aufbewahrungskassette nach einem der Ansprüche 1 bis 9 mit einem mehrgliedrigem Klemmring (24) im zentralen Bereich des Plattenaufnahmeteils (4) zur Aufnahme je einer kreisförmigen Informationsplatte (29), dadurch gekennzeichnet, daß Klemmelemente (Zungen 27) am Umfang einer zentralen Öffnung (28) des Plattenaufnahmeteiles (4) wechselweise nach oben und nach unten ragend verteilt angeordnet sind.

## Claims

1. A cassette (1) for storing circular information discs (29) and comprising a base part (2), a cover part (3) and a disc-holding part (4), in which
- the base part (2) is pivotable relative to the cover part (3) by means of a first hinge device (12,17) provided on a first edge (6) of the base part and the disc-holding part (4) is pivotally received by the base part,
- both sides of the disc-holding part (4) respectively have clamp holders (24-27) for a central hole of a circular information disc (29),
characterized in that
- the disc holding part (4) is pivotally mounted on the base part (2) by means of a second hinge device (18,19) which is disposed on the edge (7) of the base part (2) opposite the first edge (6) comprising the first hinge device (12,17),
- the disc holding part (4) is pivotable by means of the second hinge device (18,19) by a maximum pivoting angle of at least 80° to an end position in which the disc holding part (4) comes to abut a pivoting-travel limiter provided in the region of the second hinge device (18,19) and in which both sides of the disc holding part (4) are freely accessible for removal of one of the two information discs (29) as desired.

2. A cassette according to claim 1, characterized in that the cover part (3) and the base part (2), apart from the second hinge device (18,19) are commercial parts of a cassette (1) for storing a single circular information disc.

3. A cassette according to claim 1 or 2, characterized by an engagement cavity (21) between the base part (2) and the disc-receiving part (4) on the edge (6) of the base part (2) opposite the second hinge device (18,19).

4. A cassette according to any of claims 1 to 3, characterized in that the second hinge device (18,19) is disposed inside the base part (2) near an end wall (9) parallel to it.

5. A cassette according to any of claims 1 to 4, characterized in that the base part (2) has end walls (8,9) of use as book spines on its edge (6) receiving the hinge device (12,17) and on the opposite edge (7).

6. A cassette according to any of claims 1 to 5, characterized in that the pivoting-travel limiter is provided on the end wall (9) of the base part (2), of use particularly as a second book spine.

7. A cassette according to any of claims 1 to 6, characterized in that the maximum pivoting angle between the disc-receiving part (4) and the base part (2) is 120°, preferably about 80° to 100°.

8. A cassette according to any of claims 1 to 7, characterized in that the disc-receiving part (4) with the hinge pins (19) integrally connected thereto on each side and the bottom part (2) each have a bore (18) for receiving a respective hinge pin (19) as a hinge device.

9. A cassette according to claim 8, characterized in that the bores (18) are each provided in a flange in the base part (2).

10. A cassette according to any of claims 1 to 9 comprising a multi-part clamping ring (24) in the central region of the disc-receiving part (4) for receiving a respective circular information disc (29), characterized in that clamping elements (tongues 27) at the periphery of a central opening of the disc-receiving part (4) are disposed so as to project alternately upwards and downwards.

## Revendications

1. Boîtier de rangement pour disques supports d'informations circulaires (29), constitué d'une partie de fond (2), d'une partie de couvercle (3) et d'une partie de positionnement de disques (4), dans lequel
- la partie de fond (2) peut pivoter par rapport à la partie de couvercle (3) au moyen d'un premier organe à charnière (12, 17) prévu sur un premier bord (6) de la partie de fond, la partie de positionnement de disques (4) pouvant être montée à pivot sur la partie de fond (2),
- les deux côtés de la partie de positionnement de disques (4) comportent des éléments de blocage (24 ; 27) destinés à un trou central d'un disque support d'informations circulaire (29),
caractérisé en ce que,
- la partie de positionnement de disques (4) est montée à pivot sur la partie de fond (2) au moyen d'un deuxième organe à charnière (18, 19), qui est disposé sur le bord (7) de la partie de fond (2) situé à l'opposé du premier bord (6) muni du premier organe à charnière (12, 17),
- la partie de positionnement de disques (4) peut être pivotée suivant un angle de pivotement maximal d'au moins 80° au moyen du deuxième organe à charnière (18, 19) jusque dans une position finale, dans laquelle la partie de positionnement de disques (4) est amenée contre un élément limiteur de pivotement disposé dans la zone du deuxième organe à charnière (18, 19), et dans laquelle les deux côtés de la partie de positionnement de disques (4) sont librement accessibles pour le retrait facultatif d'un des deux disques supports d'informations (29).

2. Boîtier de rangement selon la revendication 1, caractérisé en ce que la partie de couvercle (3) et la partie de fond (2) sont à l'exception du deuxième organe à charnière (18, 19) des éléments usuels du commerce d'un boîtier de rangement (1) pour un disque support d'informations circulaire unique.

3. Boîtier de rangement selon l'une des revendications 1 ou 2, caractérisé par un renfoncement de prise (21) entre la partie de fond (2) et la partie de positionnement de disques (4) sur le bord (6) de la partie de fond (2) située à l'opposé du deuxième organe à charnière (18, 19).

4. Boîtier de rangement selon l'une des revendications 1 à 3, caractérisé en ce que le deuxième organe à charnière (18, 19) est disposé à l'intérieur de la partie de fond (2) à côté d'une paroi frontale (9) qui lui est parallèle.

5. Boîtier de rangement selon l'une des revendications 1 à 4, caractérisé en ce que la partie de fond (2) comporte des parois frontales (8, 9) utilisables en tant que dos de livre sur le bord (6) muni de l'organe à charnière (12, 17) ainsi que sur le bord opposé (7).

6. Boîtier de rangement selon l'une quelconque des revendications 1 à 5, caractérisé en ce que l'élément limiteur de pivotement est prévu sur la paroi frontale (9) de la partie de fond (2), qui est notamment utilisable en tant que second dos de livre.

7. Boîtier de rangement selon l'une quelconque des revendications 1 à 6, caractérisé en ce que l'angle de pivotement maximal entre la partie de positionnement de disques (4) et la partie de fond (2) est égal à 120°, cet angle étant de préférence compris entre 80° et 100°.

8. Boîtier de rangement selon l'une quelconque des revendications 1 à 7, caractérisé en ce que la partie de positionnement de disques (4) comporte de chaque côté un axe de charnière (19) qui y est relié d'un seul tenant, et en ce que la partie de fond (2) comporte des trous (18) correspondants pour recevoir respectivement un axe de charnière (19) et constituer l'organe à charnière.

9. Boîtier de rangement selon la revendication 8, caractérisé en ce que les trous (18) sont respectivement prévus dans une nervure (11) de la partie de fond (2).

10. Boîtier de rangement selon l'une quelconque des revendications 1 à 9, comportant une couronne de blocage (24) en plusieurs éléments dans la zone centrale de la partie de positionnement de disques (4) pour recevoir un disque support d'informations circulaire (29) correspondant, caractérisé en ce que des éléments de blocage (languettes 27) sont disposés de façon répartie sur le pourtour d'une ouverture centrale (28) de la partie de positionnement de disques (4) en faisant alternativement saillie vers le haut et vers le bas.
